(19) Europäisches Patentamt
European Patent Office
Office européen des brevets

(11) EP 1 207 177 A1

(12) EUROPEAN PATENT APPLICATION

(43) Date of publication:
**22.05.2002 Bulletin 2002/21**

(51) Int Cl.[7]: **C08J 7/12**
// C08L23:02

(21) Application number: **00125037.2**

(22) Date of filing: **16.11.2000**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Borealis Technology Oy**
**06101 Porvoo (FI)**

(72) Inventors:
- **Borve, Kjetil Larsen**
  **3280 Tjodalyng (NO)**
- **Redford, Keith**
  **1481 Hagan (NO)**
- **Thatcher, Jane**
  **3213 Sandefjord (NO)**

(74) Representative: **Kador & Partner**
**Corneliusstrasse 15**
**80469 München (DE)**

# (54) Process for priming polyolefin surfaces

(57) A process for priming polyolefin surfaces comprises the steps of

a) applying an azido-compound of the formula (I) on the polyolefin surface

$$N{=}N{=}N\text{-}X\text{-}R\text{-}Y \qquad (I)$$

wherein X represents $-SO_2-$, -CO-, -O-CO-, $-PO_2-$, $-PO_3-$, or Si(=O)-, R represents an aryl, alkyl, or aralkyl group having 3 to 20 carbon atoms, and Y represents at least one functional group, and

b) decomposing the azido group of the azido-compound (I) by heating and/or irradiation.

EP 1 207 177 A1

## Description

Due to the weak adhesion of paint to polyolefins, such as polypropylene, a prime coat has to be applied to the surface. In the car industry halogenated primers are currently used which are applied from organic solvents. Apart from the environmental concerns of the currently used solvent-based systems, there is a need to improve the adhesion of the paint to the polyolefin surface by a simple method.

To improve the paintability and adhesion to polar surfaces, it is known to modify the polymers and to use ionomers such as carboxylated propylene polymers as substrates. The ionomers can be obtained by mechanically mixing polypropylene, for instance, with azidosulfonyl-benzoic acid at elevated temperatures (US-A-4945136).

A variety of methods have been employed for cross-linking polyolefins with diazidosulfonyl compounds. For instance, US-A-3714194 discloses the use of di(azidosulfonyl)xanthone as cross-linking agent in a photo resistor system by applying a solution of the linear polymer and the cross-linking agent to obtain a film on a supportive base, for instance glass, then placing a negative on the film and exposing it to ultraviolett radiation to obtain an insoluble polymer as a positive image.

It is an objective of the invention to provide a primer coat which significantly improves the adhesion to the surface of polyolefin substrates.

According to the invention the surface of a polyolefin substrate is primed by

a) applying to the polyolefin surface an azido-compound of the formula (I)

$$N=N=N-X-R-Y \qquad (I)$$

wherein X represents $-SO_2-$, -CO-, -O-CO-, $-PO_2-$, $-PO_3-$ oder -Si(=O)-, R an aryl, alkyl or aralkyl group having 3 to 20 carbon atoms, and Y a functional group and

b) decomposing the azido-group of the azido-compound (I) by heating and/or irradiation.

When the azido-group of compound (I) decomposes, it loses nitrogen gas to leave a chemically very reactive nitrogen with two lone electrons according to the following reaction (I)

$$Y-R-X-N=N=N \rightarrow Y-R-X-N: + N_2 \qquad (I).$$

In the singlet form the dominant chemistry of this group is as a double-free radical. In the triplet state, however, the chemistry is very different. The nitrogen with the two lone electrons can insert into a bond. With polyolefin, as polypropylene, this would be a carbon-hydrogen or a carbon-carbon bond. The relative stability of the triplet and singlet states is dictated by the environment of the nitrogen, specifically the group it is bonded to. Nitrogen connected to $-SO_2-$ favors the triplet as well as the other electronegative groups as carbonylester and the phosphor- or silicone- containing groups defined above.

The invention is basically applicable to all polyolefin substrates without functional groups. However, it is preferably used to prime the surface of substrates consisting of polyethylene and in particular of polypropylene for technical application. By polypropylene is meant a plastic based on polypropylene or on co-polymers of propylene, the propylene monomer constituting the major part of the mass. Similarly, by polyethylene a plastic is meant based on polyethylene or on co-polymers of ethylene, in which the ethylene-monomer constitutes the major part of the mass. That is, the term polypropylene or polyethylene includes all types of propylene and ethylene polymers such as propylene or ethylene homo-polymers and co-polymers, as well as blends and alloys containing polypropylene or polyethylene as the major part.

The functional group Y of azido-compound (I) can be practically any functional group which withstands the decomposition treatment according to step b) and can be used to react or interact with the paint or any other layer the primed surface has to adhere to the polyolefin substrate.

From this large number some typical groups are, for instance, carboxy, acid anhydride, ester, including for instance lactone, amid, including for instance lactam, amine, acylamido, such as acetamido, isocyanate, hydroxyl, including alcohol and phenol, epoxy or silane group. Other groups Y are, for instance, inorganic acid groups, as sulfonic acid, or isonitriles, and so forth. Also groups with unsaturated carbon-carbon bonds as vinyl groups or any other group reacting or interacting with the paint, layer or coating which has to be applied to the polyolefin substrate can be used.

Y can be one or more than one group bound to the aryl, alkyl or aralkyl group R. The aryl group, including the aryl group of the aralkyl group can be any aryl group, as benzene or poly-aryls, as biphenyl, including condensated

polyaryls as naphtalene or anthracene.

Particularly preferred are aryl and aralkyl groups in which Y is attached to the aromatic nucleus, as 4-azidosulfonyl benzoic acid, 4-azidosulfonyl acetamido benzene, or for instance 4-azidosulfonyl-phthalic acid. Further substituents as chloro groups or hydroxy groups can be attached to the aromatic nucleus.

An example of reaction (I) with 4-azidosulfonyl benzoic acid grafted onto a polypropylene surface is illustrated below.

PP +

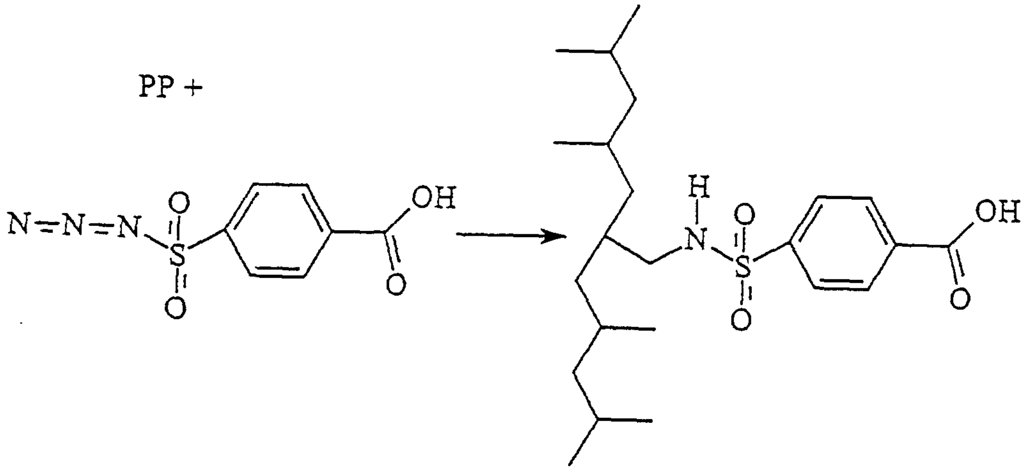

The present invention offers a flexible system to obtain a covalently bound layer on the surface of the polyolefin substrate that provides a surface-chemical functionality that can be used to react or interact further with a paint or other layer or coating which has to adhere to the surface of the polyolefin substrate.

The azido-compound (I) is preferably applied in solution. The solvent can be an organic solvent. However, when a water-soluble azido-compound is used, it is possible to use solvent-free, water-based systems.

The concentration of the azido-compound (I) in the solution is preferably between 0.05 and 50 % by wt., in particular between 0.1 and 20 % by wt. The solution can be applied to the substrate by immersion or spraying, for instance.

Preferably, the solvent is removed, for instance by evaporation, from the substrate before the azido-compound (I) is decomposed in step (b).

Decomposition of the azido-group according to reaction (I) can take place by heating the azido-compound (I) preferably to more than 120°C, in particular to more than 160°C. In addition, the azido-groups can be activated by exposing the azido-compound (I) applied to the surface of the polyolefin substrate to radiation, as thermal or ultraviolet radiation. It is, of course, possible to combine heating and radiating for decomposing compound (I). However, according to a particularly preferred embodiment of the invention, the azido-groups are activated at room temperature (that is between about 15 and 30°C) by UV radiation, for instance with a wave length between 200 and 350 nm.

According to the present invention, on any polyolefin substrate a primer coat can easily be obtained providing a strong adherence between the substrate and the layer or layers applied to the primer coat. For instance, in the car industry strong-adhering top coatings on polyolefin parts, in particular polypropylene parts, can be obtained, as for instance on bumpers.

In order to further facilitate the understanding of the invention, an example follows below. The example is only intended to be illustrative and should not be interpreted as limiting to the invention.

### Example

Polypropylene (HC115J) plates were immersed in a 50:50 (v/v) xylene acetone solution containing 1 wt.% 4-azidosulfonylacetamidobenzene or 4-carboxybenzenesulfonazide (CBSA). The plates were removed, and the solvent allowed to evaporate for 10 minutes. The plates were then irradiated with UV at 254 nm (10 cm distance) for 30 seconds, 2 minutes, 56 minutes, and 10 minutes duration. The irradiated plates were then immersed in acetone for 5 minutes to remove unreacted azide. The plates were removed and the solvent allowed to evaporate (PP/CBSA washed).

**Comparative example**

Control samples were prepared with the same solvent washing procedure, but without azide, and irradiated for 0 minutes, 2 minutes, 5 minutes, and 10 minutes. The plates were then washed in acetone (PP HC 115 J).

Figure 1 and figure 2 show the ATR FTIR spectra of the plate after washing with acetone according to the example and the comparative example.

According to figure 1, in the sample "PP/CBSA washed" there is a strong band occurring at near 3500 $cm^{-1}$ and 3400 $cm^{-1}$ indicating N-H stretching frequencies. In the control sample PP HC 115 J these bands are not observed.

According to figure 2, in the "PP/CBSA washed" sample a (broad) band around 1650 $cm^{-1}$ indicates clearly C=O stretching vibrations. Since it is a rather broad band this also indicates a secondary amide. In the reference spectrum PP HC 115 J no such band is observed.

Thus, figures 1 and 2 indicate that a chemical link has been established between the CBSA and the PP polymer after the surface treatment.

**Claims**

1. A process for priming polyolefin surfaces comprising the steps of

   a) applying an azido-compound of the formula (I) on the polyolefin surface

   $$N{=}N{=}N{-}X{-}R{-}Y \qquad (I)$$

   wherein X represents $-SO_2-$, -CO-, -O-CO-, $-PO_2-$, $-PO_3-$, or Si(=O)-, R represents an aryl, alkyl, or aralkyl group having 3 to 20 carbon atoms, and Y represents at least one functional group, and

   b) decomposing the azido group of the azido-compound (I) by heating and/or irradiation.

2. Process according to claim 1, wherein the polyolefin is polypropylene, a co-polymer of polypropylene in which the propylene monomer constitutes the major part of the mass or a blend or alloy of polypropylene with another polyolefin in which the polypropylene constitutes the major part of the mass.

3. Process according to claim 1, wherein the functional group Y of the azido-compound (I) is a carboxy, acid anhydride, ester, amid, amine, acylamido, isocyanate, hydroxyl, epoxy, or silane group.

4. Process according to claim 1, wherein the azido-compound (I) is applied as solution.

5. Process according to claim 4, wherein the solution contains 0.05 to 40 % by weight of the azido-compound (I).

6. Process according to claim 4 or 5, wherein the solvent is removed before step b).

7. Process according to claim 1, wherein the azido-group of the azido-compound (I) is decomposed by heating at a temperature of more than 120°C.

8. Process according to claim 1, wherein the azido group of the azido-compound (I) is decomposed by ultraviolet radiation.

9. Process according to claim 8, wherein the decomposition by ultraviolet radiation is performed at room temperature.

10. Use of the process according to one of the preceding claims to provide a primer for painting polyolefin substrates.

Figure 1

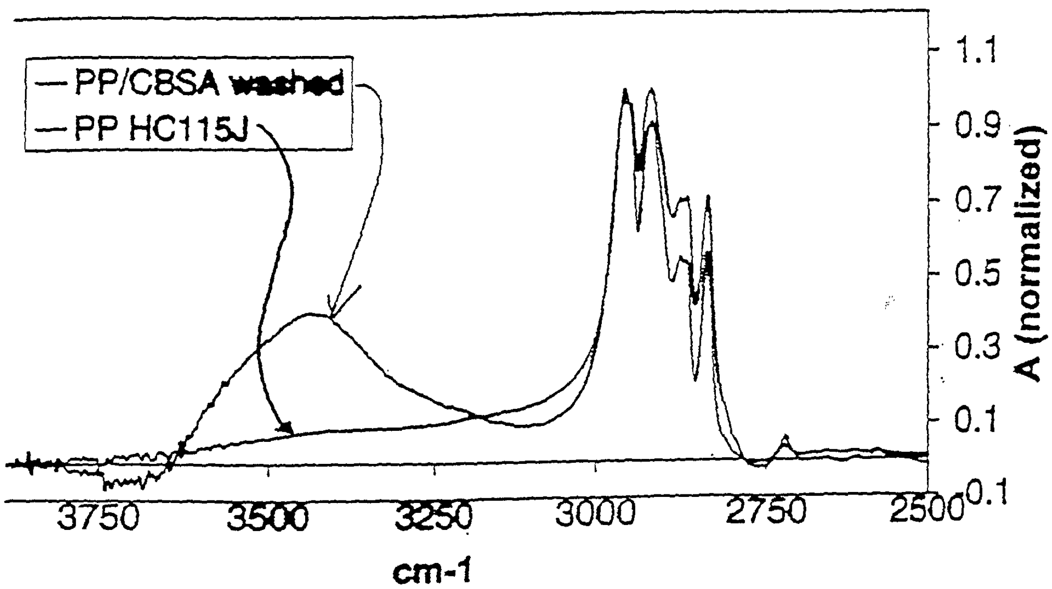


Figure 2

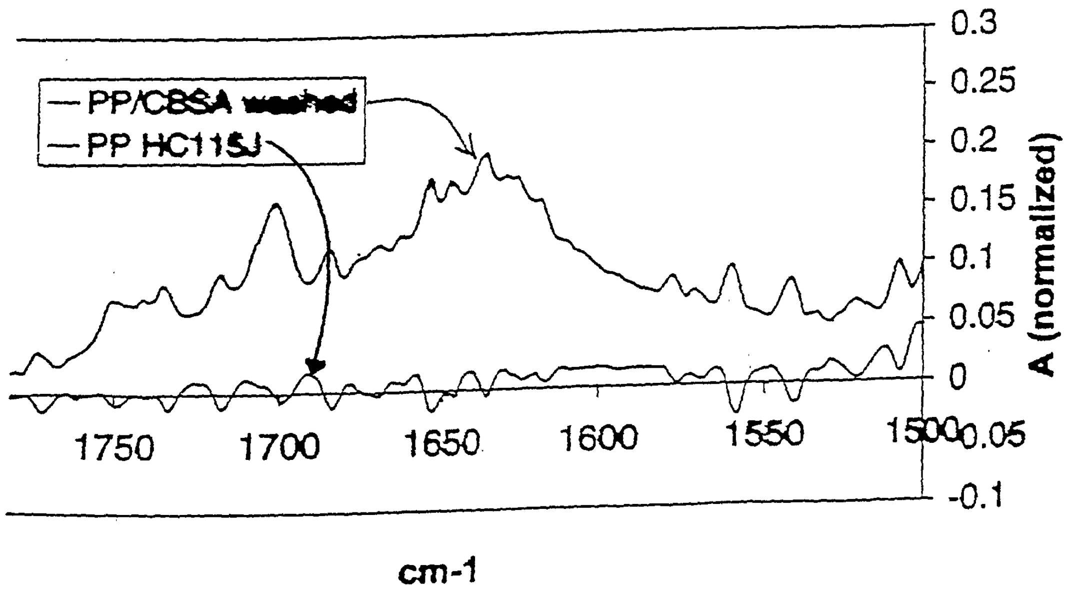

European Patent Office

# EUROPEAN SEARCH REPORT

Application Number
EP 00 12 5037

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>Y | US 4 654 262 A (ALONSO OSCAR) 31 March 1987 (1987-03-31)<br>* column 2, line 49 - column 4, line 2 *<br>* example 10 *<br>* claims 1-5 * | 1-6,8,9<br>1-10 | C08J7/12<br>//C08L23:02 |
| Y | GB 980 160 A (HERCULES POWDER COMPANY) 13 January 1965 (1965-01-13)<br>* claims 6-8 *<br>* page 1, line 27 - line 37 *<br>* page 1, line 56 - page 2, line 1 *<br>* example 3 * | 1-10 | |
| X | EP 0 308 860 A (HERCULES INC) 29 March 1989 (1989-03-29)<br>* claim 1 *<br>* page 2, line 39 - page 3, line 19 *<br>* page 3, line 39 - line 45 * | 1-3,7 | |

TECHNICAL FIELDS SEARCHED (Int.Cl.7)
C08J

The present search report has been drawn up for all claims

| Place of search | Date of completion of the search | Examiner |
|---|---|---|
| THE HAGUE | 27 April 2001 | Hallemeesch, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 12 5037

This annex lists the patent family membersrelating to the patent documents cited in the above-mentioned European search report.
The members are as contained in the European Patent Office EDP file on
The European Patent Office is in no way liable for these particulars which are merely given for the purpose of information.

27-04-2001

| Patent document cited in search report | Publication date | Patent family member(s) | Publication date |
|---|---|---|---|
| US 4654262 A | 31-03-1987 | EP 0278183 A | 17-08-1988 |
| | | JP 63196631 A | 15-08-1988 |
| GB 980160 A | 13-01-1965 | DE 1217619 B | |
| | | US 3211713 A | 12-10-1965 |
| EP 0308860 A | 29-03-1989 | US 4772733 A | 20-09-1988 |
| | | JP 1113379 A | 02-05-1989 |

EPO FORM P0459

For more details about this annex : see Official Journal of the European Patent Office, No. 12/82